# EUROPEAN PATENT APPLICATION

(11) **EP 4 136 981 A1**
(43) Date of publication of application: **22.02.2023**
(21) Application number: 21789253.8
(22) Date of filing: 14.04.2021
(51) Int. Cl.: A23L 7/10, A23L 23/00, A23P 20/10, A23L 3/36, A23P 30/00, A23D 9/00

(54) **FROZEN RICE AND PREPARATION METHOD THEREFOR**

(30) Priority: 14.04.2020 KR 20200045486
(71) Applicant: CJ Cheiljedang Corporation, Seoul 04560 (KR)
(72) Inventor: JEONG, Da Woon, Suwon-si, Gyeonggi-do 16495 (KR); SON, Eun Yeong, Suwon-si, Gyeonggi-do 16495 (KR); SAGONG, Hun Gu, Suwon-si, Gyeonggi-do 16495 (KR); SHINE, Sung Woo, Suwon-si, Gyeonggi-do 16495 (KR); LEE, Jong Il, Suwon-si, Gyeonggi-do 16495 (KR); PARK, Sung Yong, Suwon-si, Gyeonggi-do 16495 (KR)
(74) Representative: Bandpay & Greuter
(86) International application number: PCT/KR2021/004709
(87) International publication number: WO 2021/210913

(57) **Abstract**

The present invention relates to a frozen cooked rice including a molded cooked rice and a moisture transfer preventing layer formed on at least a part of the surface of the molded cooked rice, in which after the frozen cooked rice is defrosted under conditions of normal temperature and normal pressure for 1 day, the difference between the moisture content of the surface of the frozen cooked rice and the moisture content of a deep part of the frozen cooked rice is 5 wt% or more based on the total weight of the frozen cooked rice, and a method for preparing a frozen cooked rice, the method including forming a moisture transfer preventing layer on at least a part of the surface of a molded cooked rice, hardening the at least a part of the surface of the molded cooked rice on which the moisture transfer preventing layer is formed, and freezing the hardened molded cooked rice.

## Description

### BACKGROUND OF THE INVENTION

### Field of the Invention

The present invention relates to a frozen cooked rice and a method for preparing thereof.

### Description of the Related Art

In recent years, in accordance with the trend of faster and simpler life patterns of modern people, the need for a plain meal (convenience meal) which can be easily cooked and eaten has emerged. With the introduction of Western-style food, there are toast, instant food (fast food), and the like which can be easily eaten, but there is a problem that such a plain meal can adversely affect nutrition or health.

Meanwhile, rice is an important food resource which has been cultivated mainly in Asian areas and consumed as human staple food for a long time, and is known to have a high nutritional value because the rice contains a large amount of essential amino acids, and to be good for metabolism in the body due to a high protein efficiency ratio and a high digestion and absorption rate.

A rice ball made using such rice can be eaten with a high nutritional value without special side dishes and can be easily eaten with bare hands, and thus is regularly used by people who need to have a meal while on the go or within a short period of time. However, since such a rice ball cannot be stored at room temperature for a long time and may be damaged in hot weather, freezing and distributing the rice ball is being considered, and such a frozen cooked rice needs to be easily eaten by microwave cooking before eating.

Meanwhile, as the frozen cooked rice is stored for a long period of time, internal moisture is transferred to the outside so that the food texture of the frozen cooked rice cannot be maintained, or for example, like triangular gimbap or the like, when laver is provided on the surface of the frozen cooked rice, the moisture of the frozen cooked rice is transferred to laver or the like, resulting in a problem of reducing the food texture of the laver is caused. Moreover, when the frozen cooked rice is restored by microwave cooking or the like, in a state where amylose and amylopectin of starch are gelatinized, recrystallization occurs due to an increase in the interaction between molecular chains, resulting in a physical change in which hardness or the like is increased. Such an aging phenomenon of starch has problems of not only degrading the quality of food made using rice, but also deteriorating taste, texture, and marketability.

Accordingly, during the period of distribution and storage of a frozen cooked rice in a frozen state, there is a demand to prevent the moisture in the inside of the frozen cooked rice from being transferred to the outside or to prevent external moisture (moisture in the air or the like) from penetrating into the frozen cooked rice, and even after microwave cooking, loss of physical properties such as moisture content or hardness needs to be minimized.

### DISCLOSURE OF THE INVENTION

### TECHNICAL PROBLEM

The present invention is to provide a frozen cooked rice which can prevent moisture contained in the frozen cooked rice from being transferred to the outside and can prevent moisture from entering the frozen cooked rice from outside during distribution, so that the storage stability is improved and the shelf life is extended.

Moreover, the present invention is to provide a frozen cooked rice which has excellent moldability, of which the shape is preserved even after packaging, and in which a change in physical properties is little even after defrosting so that excellent food texture can be maintained, and accordingly, sensory properties are excellent.

### TECHNICAL SOLUTION

Therefore, an aspect of the present invention provides a frozen cooked rice comprising: a molded cooked rice; and a moisture transfer preventing layer formed on at least a part of the surface of the molded cooked rice, wherein after the frozen cooked rice is defrosted under conditions of normal temperature and normal pressure for 1 day, the difference between the moisture content of the surface of the frozen cooked rice and the moisture content of a deep part of the frozen cooked rice is 5 wt% or more based on the total weight of the frozen cooked rice.

Moreover, another aspect of the present invention provides a method for preparing a frozen cooked rice, comprising: forming a moisture transfer preventing layer on at least a part of the surface of a molded cooked rice; hardening the at least a part of the surface of the molded cooked rice on which the moisture transfer preventing layer is formed; and freezing the hardened molded cooked rice.

### THE EFFECTIVENESS OF THE INVENTION

The frozen cooked rice according to the present invention has the moisture transfer preventing layer formed on at least a part of the surface of the molded cooked rice so that there are the effects of preventing moisture contained in the frozen cooked rice from being transferred to the outside and preventing moisture from entering the inside of the frozen cooked rice from outside. Accordingly, the storage stability is improved, and thus there is the effect of extending the shelf life. Moreover, since the moisture transfer of the frozen cooked rice (or the molded cooked rice) can be prevented as described above, there is the effect of allowing an edible packaging material (for example, laver, a snack, or the like) for packaging the frozen cooked rice to maintain a food texture that does not get wet.

### BRIEF DESCRIPTION OF THE DRAWINGS

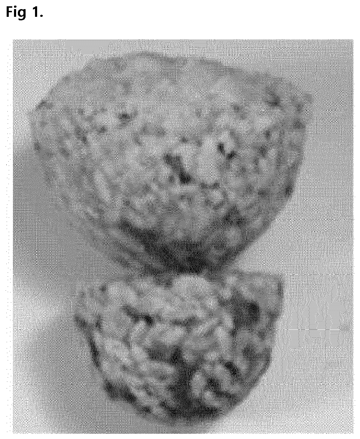

FIG. 1 is a view showing a photograph of a frozen cooked rice prepared in Preparation Example 1 of the present invention.
FIG. 2 is a view showing a flow chart of a method for preparing a frozen cooked rice according to an embodiment of the present invention.
FIG. 3 is a view showing the shape of a frozen cooked rice according to the embodiment of the present invention.

### DETAILED DESCRIPTION OF THE PREFERRED EMBODIMENT

Hereinafter, a frozen cooked rice according to an embodiment of the present invention will be described.

The frozen cooked rice may comprise a molded cooked rice, and a moisture transfer preventing layer formed on at least a part of the surface of the molded cooked rice, wherein after the frozen cooked rice is defrosted under conditions of normal temperature and normal pressure for 1 day, the difference between the moisture content of the surface of the frozen cooked rice and the moisture content of a deep part of the frozen cooked rice may be 5 wt% or more based on the total weight of the frozen cooked rice.

The molded cooked rice means cooked rice molded into a predetermined shape, and the molded cooked rice may include cooked rice and at least one among a raw material and a sauce. The cooked rice is made using rice as a main raw material, and the rice may include white rice, brown rice, red rice, green rice, black rice, and/or glutinous rice. The cooked rice may further include at least one selected from the group consisting of barley, beans, foxtail millet, proso millet, sorghum, wheat, adlay, and corn, in addition to the rice.

The cooked rice may contain the rice in an amount of 60 to 100 wt% based on the total weight of the cooked rice, and may contain the rice specifically in an amount of 70 to 99 wt%, 80 to 95 wt%, 60 to 90 wt%, 60 to 85 wt%, or 60 to 80 wt%.

The raw material may include meat, seafood, vegetables, or the like, and may include at least one selected from the group consisting of meat, seafood, and vegetables. The meat may include livestock meat such as beef and pork and/or poultry meat such as chicken, turkey, and duck, the seafood may include shrimp, squid, octopus, sea urchin, manila clam, yellow pollack, anchovy, kelp, seaweed, pollock, flatfish, mackerel, salmon, Spanish mackerel, or the like, the vegetables may include pumpkin, onion, carrot, cabbage, garlic, green onion, radish, mushroom, bean sprout, spinach, bracken or the like, but the present invention is not limited thereto.

The sauce may include soy sauce for soup, dark soy sauce, sesame oil, minced garlic, pear juice, pepper, sesame, salt, sugar, cooking wine, red pepper paste, soybean paste, starch syrup, olive oil, canola oil, or the like, but is not limited thereto.

The molded cooked rice may be prepared, for example, like fried rice, by cooking after adding at least one among the raw material and the sauce to cooked rice, or may be prepared, for example, like bibimbap, by first cooking at least one among the raw material and the sauce and then adding (mixing) the resultant to cooked rice. That is, the molded cooked rice may include cooked rice, bibimbap, fried rice, and the like.

The molded cooked rice may further contain garnish such as egg garnish, egg wrap, meatball, ginkgo nut, shiitake, walnut, sesame, pine nut, red pepper, chestnut, olive, herb, paprika, water parsley, or sesame salt, and may further contain a commercially available a seasoning oil, a seasoning liquid, or the like.

The molded cooked rice is obtained by being molded into a predetermined shape, and may have various three-dimensional shapes such as a sphere, a hemisphere, a crushed sphere, a cylinder, a polygonal column (a triangular column, a quadrangular column, or the like), a cube, a bar, or a half-ellipsoid.

Specifically, the molded cooked rice may have a spherical shape which is the form of a typical rice ball, may have a hemispherical shape obtained by dividing a sphere into two parts, may have a crushed spherical shape, or may have a half-elliptical shape obtained by dividing an ellipsoid having a difference between a semi major axis and a semi minor axis into two parts. The molded cooked rice may have a cylindrical shape or a polygonal column shape, in addition to the shapes of a sphere, a hemisphere, a crushed sphere, and a half-ellipsoid.

Furthermore, the molded cooked rice may have a plurality of various three-dimensional shapes such as a sphere, a hemisphere, a crushed sphere, a cylinder, a polygonal column, or a half-ellipsoid. For example, the molded cooked rice may include a spherical surface portion having a shape of a portion of a spherical surface, and the spherical surface portion may have a hemispherical shape obtained by dividing a sphere into two parts.

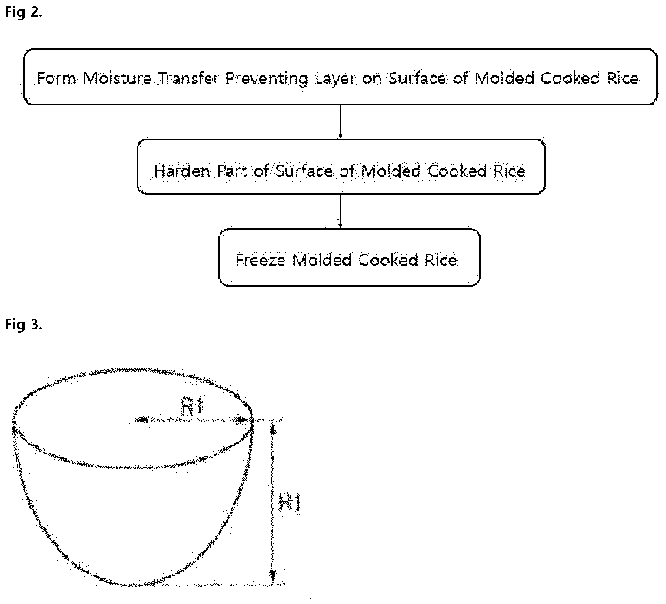

The molded cooked rice may have a deformed hemispherical shape having a curved surface portion elongated in the vertical direction, as shown in FIG. 3. That is, the molded cooked rice may be formed so that a height (H1) is larger than a radius (R1) of the upper surface of the curved surface portion. Here, a value obtained by dividing the height (H1) of the curved surface portion by the radius (R1) of the upper surface may be 1.2 or more and 1.5 or less.

The moisture transfer preventing layer can prevent moisture contained in the molded cooked rice from being transferred to the outside and can prevent the frozen cooked rice from getting wet due to external moisture entering the frozen cooked rice during distribution. Accordingly, the storage stability is improved, and thus the shelf life can be extended. Moreover, even if freezing/defrosting is repeatedly performed during a cooking process, the rate of change in the moisture content of the surface and/or the deep part of the frozen cooked rice can be minimized, and thus the food texture when eating can be excellently maintained.

The moisture transfer preventing layer may contain at least one moisture transfer preventing liquid selected from among a low sugar solution and an edible fat or oil. For example, the low sugar solution means an aqueous solution in which a low sugar (main component: dextrin) is mixed with purified water in a ratio of 30% (w/w), and the edible fat or oil may include at least one selected from among drying oil, semi-drying oil, and non-drying oil. Specifically, the edible fat or oil may include: drying oil such as perilla oil, bean oil, soybean oil, or sunflower seed oil, or an edible fat or oil having an iodine value (the number of grams of iodine added to 100 grams of oil) of 130 or greater; semi-drying oil such as sesame oil, canola oil, or grape seed oil, or an edible fat or oil having an iodine value of 100 to 130; or non-drying oil such as olive oil or palm oil, or an edible fat or oil having an iodine value of 100 or less, and for example, the edible fat or oil may include perilla oil, bean oil, soybean oil, sunflower seed oil, sesame oil, canola oil, grape seed oil, olive oil, palm oil, or the like.

The edible fat or oil may more specifically include: drying oil such as perilla oil, bean oil, soybean oil, or sunflower seed oil, or an edible fat or oil having an iodine value of 130 or greater; or semi-drying oil such as sesame oil, canola oil, or grape seed oil, or an edible fat or oil having an iodine value of 100 to 130, and may still more specifically include at least one selected from among soybean oil, perilla oil, and canola oil. Even more specifically, drying oil such as perilla oil, bean oil, soybean oil, or sunflower seed oil, or an edible fat or oil having an iodine value of 130 or greater can be used, and even still more specifically, edible fat or oil may include at least one selected from among soybean oil and perilla oil.

The frozen cooked rice may be prepared by hardening the at least a part of the surface of the molded cooked rice on which the moisture transfer preventing layer is formed. Hardening the at least a part of the surface of the molded cooked rice plays a role in preventing the moisture contained in the molded cooked rice from being transferred to the outside during distribution and/or storage, and is used in combination with forming the moisture transfer preventing layer on at least a part of the surface of the molded cooked rice, to cause a synergistic action, and thus the effect of preventing moisture transfer as described above can be maximized.

Hardening a part of the surface according to the present invention means that the surface becomes hard, whether the surface is hardened can be checked through a food texture, a tactile feeling, or the like, and the surface can be hardened by ovening, hot air, or torching.

The frozen cooked rice may be prepared by freezing the molded cooked rice having a surface of which at least a part is hardened as described above.

The freezing may be freezing the molded cooked rice having a hardened surface at a temperature of -30°C to -5°C for 6 to 36 hours so that the material temperature reaches -7°C or lower. Alternatively, the freezing may be quick freezing the molded cooked rice having a hardened surface at a temperature of -70°C to -5°C for 10 to 30 minutes. Alternatively, the freezing may be freezing the molded cooked rice at -40°C to -30°C for 30 minutes to 1 hour.

As described above, when the frozen cooked rice is prepared by hardening the molded cooked rice on which the moisture transfer preventing layer is formed, and then freezing the molded cooked rice, there are the advantages of minimizing deformation of the state of the raw material, maintaining the shape even during long-term storage, and maintaining a fresh state for a long time.

The frozen cooked rice may be distributed in a frozen state, and after being distributed, the frozen cooked rice is cooked (defrosted) using a microwave oven or the like at home or the like, and then can be eaten.

In the frozen cooked rice, after the frozen cooked rice is defrosted under conditions of normal temperature and normal pressure for 1 day, the difference between the moisture content of the surface of the frozen cooked rice and the moisture content of the deep part of the frozen cooked rice may be 5 wt% or more based on the total weight of the frozen cooked rice. Here, in the frozen cooked rice, the moisture content of the deep part of the frozen cooked rice may be more than the moisture content of the surface of the frozen cooked rice.

After the frozen cooked rice is defrosted under conditions of normal temperature and normal pressure for 1 day, the difference between the moisture content of the surface of the frozen cooked rice and the moisture content of the deep part of the frozen cooked rice may be in a range consisting of one lower limit selected from among 5 wt% or more, 6 wt% or more, 7 wt% or more, 8 wt% or more, 9 wt% or more, and 10 wt% or more, and one upper limit selected from among 20 wt% or less, 19 wt% or less, and 18 wt% or less. In this case, there is the moisture transfer prevention effect that external moisture can be prevented from being transferred to the inside of the food and the moisture in the inside of the food can be prevented from being transferred to the outside.

Moreover, after the frozen cooked rice is stored at -18°C for 9 days and then the frozen cooked rice is defrosted under conditions of normal temperature and normal pressure for 1 day, the difference between the moisture contents of the surface and the deep part of the frozen cooked rice may be 5 wt% or more. Specifically, after the frozen cooked rice is stored at -18°C for 9 days and then the frozen cooked rice is defrosted under conditions of normal temperature and normal pressure for 1 day, the difference between the moisture contents of the surface and the deep part of the defrosted frozen cooked rice may be in a range consisting of one lower limit selected from among 5 wt% or more, 6 wt% or more, 7 wt% or more, 8 wt% or more, 9 wt% or more, 10 wt% or more, 11 wt% or more, and 12 wt% or more and one upper limit selected from among 20 wt% or less, 19 wt% or less, 18 wt% or less, 17 wt% or less, 16 wt% or less, and 15 wt% or less.

Furthermore, after the frozen cooked rice is stored at -18°C for 50 days and then the frozen cooked rice is defrosted under conditions of normal temperature and normal pressure for 1 day, the difference between the moisture contents of the surface and the deep part of the frozen cooked rice may be 5 wt% or more. Specifically, after the frozen cooked rice is stored at -18°C for 50 days and then the frozen cooked rice is defrosted under conditions of normal temperature and normal pressure for 1 day, the difference between the moisture contents of the surface and the deep part of the defrosted frozen cooked rice may be in a range consisting of one lower limit selected from among 5 wt% or more, 6 wt% or more, 7 wt% or more, 8 wt% or more, 9 wt% or more, 10 wt% or more, 11 wt% or more, and 12 wt% or more and one upper limit selected from among 20 wt% or less, 19 wt% or less, 18 wt% or less, 17 wt% or less, 16 wt% or less, and 15 wt% or less.

When, after the frozen cooked rice is stored at - 18°C for 9 days or for 50 days and then the frozen cooked rice is defrosted under conditions of normal temperature and normal pressure for 1 day, the difference between the moisture contents of the surface and the deep part of the frozen cooked rice is 5 wt% or more, the moisture in the inside of the frozen cooked rice can be prevented from being transferred to the outside or to an external edible container (a snack, laver, or the like) containing the frozen cooked rice.

The surface of the frozen cooked rice means the outermost portion of the frozen cooked rice, and may mean at least a part of the surface on the outermost side of the frozen cooked rice which is in contact with the outside or air. The surface of the frozen cooked rice may include a region occupying a thickness of 0 to 10 mm or 0 to 5 mm from at least a part of the surface on the outermost side of the frozen cooked rice to the inside of the frozen cooked rice. The deep part of the frozen cooked rice may mean all portions except the surface of the frozen cooked rice, and may mean, for example, a partial region or the entire region which occupies from an inner boundary surface of the surface of the frozen cooked rice to a central part of the frozen cooked rice.

After the frozen cooked rice is defrosted at normal temperature and normal pressure for 1 day, the moisture content of the surface of the frozen cooked rice may be 50 wt% or less per 1 g of the frozen cooked rice, and may be, for example, in a range consisting of one upper limit selected from among 49 wt% or less, 48 wt% or less, 47 wt% or less, 46 wt% or less, 45 wt% or less, 44 wt% or less, 43 wt% or less, and 42 wt% or less and one lower limit selected from among 30 wt% or more, 35 wt% or more, 36 wt% or more, and 37 wt% or more.

When the moisture content of the surface of the frozen cooked rice after the frozen cooked rice is defrosted at normal temperature and normal pressure for 1 day satisfies the above range, the storage stability of the frozen cooked rice is improved, and the food texture is excellent when eating after microwave cooking.

Moreover, after the frozen cooked rice is stored at -18°C for 9 days and then the frozen cooked rice is defrosted under conditions of normal temperature and normal pressure for 1 day, the moisture content of the surface of the frozen cooked rice may be 50 wt% or less per 1 g of the frozen cooked rice, and may be, for example, in a range consisting of one upper limit selected from among 49 wt% or less, 48 wt% or less, 47 wt% or less, 46 wt% or less, and 45 wt% or less and one lower limit selected from among 35 wt% or more, 36 wt% or more, 37 wt% or more, 38 wt% or more, 39 wt% or more, and 40 wt% or more.

Further, after the frozen cooked rice is stored at - 18°C for 50 days and then the frozen cooked rice is defrosted under conditions of normal temperature and normal pressure for 1 day, the moisture content of the surface of the frozen cooked rice may be 50 wt% or less per 1 g of the frozen cooked rice, and may be, for example, in a range consisting of one upper limit selected from among 49 wt% or less, 48 wt% or less, 47 wt% or less, 46 wt% or less, 45 wt% or less, 44 wt% or less, and 43 wt% or less and one lower limit selected from among 35 wt% or more, 36 wt% or more, 37 wt% or more, 38 wt% or more, 39 wt% or more, and 40 wt% or more.

Furthermore, after the frozen cooked rice is defrosted at normal temperature and normal pressure for 1 day, the moisture content of the deep part of the frozen cooked rice may be 50 to 60 wt% per 1 g of the frozen cooked rice, and may be, for example, in a range consisting of one lower limit selected from among 50 wt% or more, 51 wt% or more, 52 wt% or more, 53 wt% or more, 54 wt% or more, 55 wt% or more, 56 wt% or more, 57 wt% or more, and 58 wt% or more and one upper limit selected from among 60 wt% or less, 59 wt% or less, and 58 wt% or less.

When the moisture content of the deep part of the frozen cooked rice after the frozen cooked rice is defrosted at normal temperature and normal pressure for 1 day satisfies the above range, the storage stability of the frozen cooked rice is improved, and the food texture is excellent when eating after being defrosted.

Moreover, after the frozen cooked rice is stored at -18°C for 9 days and then the frozen cooked rice is defrosted under conditions of normal temperature and normal pressure for 1 day, the moisture content of the deep part of the frozen cooked rice may be 50 to 60 wt% per 1 g of the frozen cooked rice, and may be, for example, in a range consisting of one lower limit selected from among 50 wt% or more, 51 wt% or more, 52 wt% or more, 53 wt% or more, 54 wt% or more, 55 wt% or more, 56 wt% or more, 57 wt% or more, and 58 wt% or more and one upper limit selected from among 60 wt% or less, 59 wt% or less, and 58 wt% or less.

Furthermore, after the frozen cooked rice is stored at -18°C for 50 days and then the frozen cooked rice is defrosted under conditions of normal temperature and normal pressure for 1 day, the moisture content of the deep part of the frozen cooked rice may be 50 to 60 wt% per 1 g of the frozen cooked rice, and may be, for example, in a range consisting of one lower limit selected from among 50 wt% or more, 51 wt% or more, 52 wt% or more, 53 wt% or more, 54 wt% or more, 55 wt% or more, 56 wt% or more, 57 wt% or more, and 58 wt% or more and one upper limit selected from among 60 wt% or less, 59 wt% or less, 58 wt% or less, and 57 wt% or less.

When, after the frozen cooked rice is put in an edible container and stored at -18°C for 9 days or for 50 days and then the frozen cooked rice is defrosted under conditions of normal temperature and normal pressure for 1 day, the moisture content of the surface of the frozen cooked rice is 50 wt% or less and the moisture content of the deep part of the frozen cooked rice is 50 to 60 wt%, there is the effect of preventing moisture from being transferred between the inside and outside of the frozen cooked rice.

Hereinafter, a method for preparing a frozen cooked rice according to the embodiment of the present invention will be described.

The method for preparing a frozen cooked rice may comprise: forming a moisture transfer preventing layer on at least a part of the surface of a molded cooked rice; hardening the at least a part of the surface of the molded cooked rice on which the moisture transfer preventing layer is formed; and freezing the hardened molded cooked rice.

First, the molded cooked rice may be prepared by cooking rice as a main raw material to prepare cooked rice, and mixing at least one among a raw material and a sauce with the cooked rice. The molded cooked rice may be prepared, for example, like fried rice, by cooking after adding at least one among the raw material and the sauce to cooked rice, or may be prepared, for example, like bibimbap, by first cooking at least one among the raw material and the sauce and then adding (mixing) the resultant to cooked rice. Here, regarding the cooked rice, the raw material, the sauce, and the rice, the aforementioned matters can be similarly applied.

After the molded cooked rice is prepared as described above, molding the molded cooked rice into a certain shape may be included before the forming of the moisture transfer preventing layer on the at least a part of the surface of the molded cooked rice. That is, the molded cooked rice can be molded into various three-dimensional shapes such as a sphere, a hemisphere, a crushed sphere, a cylinder, a polygonal column (a triangular column, a quadrangular column, or the like), a cube, a bar, or a half-ellipsoid.

Specifically, the molded cooked rice may be molded into a spherical shape which is the form of a typical rice ball. Alternatively, the molded cooked rice may be molded into a hemispherical shape obtained by dividing a sphere into two parts. Alternatively, the molded cooked rice may be molded into a half-elliptical shape obtained by dividing an ellipsoid having a difference between a semi major axis and a semi minor axis into two parts. The molded cooked rice may be molded into a cylindrical shape, a polygonal column shape, or the like, in addition to the shapes of a sphere, a hemisphere, a crushed sphere, and a half-ellipsoid.

The molded cooked rice may be molded to have a plurality of various three-dimensional shapes such as a sphere, a hemisphere, a crushed sphere, a cylinder, a polygonal column, or a half-ellipsoid. Specifically, the molded cooked rice may include a spherical surface portion having a shape of a portion of a spherical surface, and the spherical surface portion may have a hemispherical shape obtained by dividing a sphere into two parts.

The molded cooked rice may be molded into a deformed hemispherical shape having a curved surface portion elongated in the vertical direction, as shown in FIG. 3. That is, the molded cooked rice may be molded so that a height (H1) is larger than a radius (R1) of the upper surface of the curved surface portion. Here, a value obtained by dividing the height (H1) of the curved surface portion by the radius (R1) of the upper surface may be 1.2 or more and 1.5 or less.

The forming of a moisture transfer preventing layer may comprise applying a moisture transfer preventing liquid including at least one selected from among a low sugar solution and an edible fat or oil.

The moisture transfer preventing liquid can prevent the moisture contained in the molded cooked rice or the frozen cooked rice from being transferred to the outside, minimize the loss of moisture when the molded cooked rice is frozen, and prevent external moisture from entering the frozen cooked rice during distribution in a frozen state. Accordingly, the storage stability is improved, and thus the moisture transfer preventing liquid plays a role in extending the shelf life of the frozen cooked rice. Moreover, even if the frozen cooked rice is repeatedly frozen/defrosted, the rate of change in the moisture content of the surface and/or the inside of the frozen cooked rice can be minimized, and thus the crispy food texture when eating can be excellently maintained.

The moisture transfer preventing layer may contain at least one moisture transfer preventing liquid selected from among a low sugar solution and an edible fat or oil. For example, the low sugar solution means an aqueous solution in which a low sugar (main component: dextrin) is mixed with purified water in a ratio of 30% (w/w), and the edible fat or oil may include at least one selected from among drying oil, semi-drying oil, and non-drying oil. Specifically, the edible fat or oil may include: drying oil (iodine value of 130 or greater) such as perilla oil, bean oil, soybean oil, or sunflower seed oil; semi-drying oil (iodine value of 100 to 130) such as sesame oil, canola oil, or grape seed oil; or non-drying oil (iodine value of 100 or less) such as olive oil or palm oil, and for example, the edible fat or oil may include perilla oil, bean oil, soybean oil, sunflower seed oil, sesame oil, canola oil, grape seed oil, olive oil, palm oil, or the like.

The edible fat or oil may more specifically include drying oil such as perilla oil, bean oil, soybean oil, or sunflower seed oil, or semi-drying oil such as sesame oil, canola oil, or grape seed oil, and may still more specifically include at least one selected from among soybean oil, perilla oil, and canola oil.

Moreover, the method for preparing a frozen cooked rice may include a process of forming a moisture transfer preventing layer by applying a moisture transfer preventing liquid to the outer surface in a state where one surface of the molded cooked rice is placed on a mobile means. Through the aforementioned process, the moisture transfer preventing liquid may be applied to at least a part of the surface of the molded cooked rice. Applying the moisture transfer preventing liquid may be spraying the moisture transfer preventing liquid using a spray or a spray nozzle, but is not limited thereto.

Applying the moisture transfer preventing liquid to at least a part of the surface of the molded cooked rice may be performed repeatedly and continuously by the mobile means as described above. That is, when the molded cooked rice is prepared and then placed on the mobile means, and the moisture transfer preventing liquid is applied to at least a part of the surface of the molded cooked rice, the molded cooked rice to which the moisture transfer preventing liquid is applied is transported to the outside by the mobile means, and the vacancy may be replaced with a new molded cooked rice to which the moisture transfer preventing liquid is not applied.

The mobile means may be used without limitation as long as the mobile means is a means capable of transporting a molded cooked rice, but specifically, may be a conveyor belt.

The moisture transfer preventing liquid may be applied in an amount of 1 to 10 parts by weight based on 100 parts by weight of the molded cooked rice. For example, the content thereof may be in a range consisting of one lower limit selected from among 1 part by weight or more and 2 parts by weight or more, and one upper limit selected from among 10 parts by weight or less, 9 parts by weight or less, and 8 parts by weight or less.

When the content of the moisture transfer preventing liquid satisfies the above range, the surface can be sufficiently coated, the moisture contained in the frozen cooked rice is not transferred to the outside, and the moisture from the outside can be prevented from entering the frozen cooked rice during distribution while not affecting taste quality. Accordingly, the storage stability is improved, and thus the shelf life is extended and the crispy food texture can be improved and maintained even after the frozen cooked rice is defrosted.

Here, the content of the moisture transfer preventing liquid applied to the surface of the frozen cooked rice may be more than the content of the moisture transfer preventing liquid contained in the deep part of the frozen cooked rice.

Subsequently, hardening the at least a part of the surface of the molded cooked rice on which the moisture transfer preventing layer is formed may be included. The hardening of the at least a part of the surface of the molded cooked rice on which the moisture transfer preventing layer is formed may use at least one method among an oven, torching, and hot air.

The hardening using an oven may be hardening under conditions where: the temperature of the oven is 160°C to 200°C, and is, for example, in a range consisting of one lower limit selected from among 160°C or higher, 165°C or higher, 170°C or higher, 175°C or higher, and 180°C or higher, and one upper limit selected from among 200°C or lower, 195°C or lower, and 190°C or lower; and the time is 5 to 10 minutes, and is, for example, in a range consisting of one lower limit selected from among 5 minutes or longer, 6 minutes or longer, and 7 minutes or longer, and one upper limit selected from among 10 minutes or shorter, 9 minutes or shorter, and 8 minutes or shorter.

In the hardening using hot air, a common hot air dryer may be used.

In the hardening using torching, a torch machine commonly used to heat food may be used. The hardening using torching may be hardening for about 1 second to 5 seconds by direct fire.

When the above ranges are satisfied, the moisture contained in the molded cooked rice is not transferred to the outside, and the external moisture can be prevented from entering the frozen cooked rice during distribution. Accordingly, the storage stability is improved, and thus the shelf life can be extended. Furthermore, in a case where the at least a part of the surface of the molded cooked rice is hardened, when the frozen cooked rice distributed/stored in a frozen state is defrosted or cooked in a microwave oven, and then eaten, the food texture is excellent.

The hardening of the molded cooked rice to which the moisture transfer preventing liquid is applied may be performed repeatedly and continuously by the aforementioned mobile means. The hardening may be performed in a state where the molded cooked rice to which the moisture transfer preventing liquid is applied is placed on the mobile means.

For example, the molded cooked rice placed on the mobile means may be coated with the moisture transfer preventing liquid, and then transported to an oven and/or a hot air device to be hardened. The hardened molded cooked rice is transported to the outside again, and the vacancy may be replaced with an unhardened molded cooked rice to which the moisture transfer preventing liquid is applied.

The freezing of the hardened molded cooked rice may comprise freezing the molded cooked rice having a hardened surface at a temperature of -30°C to -5°C for 6 to 36 hours so that the material temperature reaches -7°C or lower, quick freezing the molded cooked rice at a temperature of -70°C to -5°C for 10 to 30 minutes, or freezing the molded cooked rice at -40°C to -30°C for 30 minutes to 1 hour.

As described above, since the frozen cooked rice is prepared by hardening the molded cooked rice on which the moisture transfer preventing layer is formed, and then freezing the molded cooked rice, there are the advantages of minimizing deformation of the state of the raw material, maintaining the shape even during long-term storage, and maintaining a fresh state for a long time.

After being distributed in a frozen state, the frozen cooked rice is defrosted under conditions of normal temperature and normal pressure (STP) or cooked using a microwave oven or the like at home or the like, and then can be eaten.

Moreover, the frozen cooked rice may be prepared in a state of being contained (accommodated) in an edible container after being frozen. Alternatively, the frozen cooked rice may be prepared as frozen food by containing (accommodating) cooked rice in an edible container before being frozen, and performing freezing. The edible container is a container which has an internal space for accommodating a frozen cooked rice and is formed of an edible material.

When the frozen cooked rice is prepared in a state of being contained (accommodated) in an edible container, by the moisture transfer preventing liquid applied to the surface of the molded cooked rice, the moisture contained in the frozen cooked rice can be prevented from being transferred to the edible container, and thus the edible container can be prevented from getting wet or losing the crispy food texture.

The edible container may be formed of an edible material. The edible container may include an inner skin and an outer skin, and both the inner skin and the outer skin may be formed of an edible material.

The inner skin may be formed in the form of a thin grain sheet, including at least one selected from the group consisting of rice, barley, beans, foxtail millet, proso millet, sorghum, wheat, and corn. The grain sheet is a thin sheet of an arbitrary shape, and may be prepared using powders and/or starch of the aforementioned grains, and water. Such a grain sheet may include rice-paper. The rice-paper is also referred to as Hamjissam, nem, banh trang, banh cha, or the like, and is basically made of rice flour and water, and the content of rice may vary depending on the country of origin. Moreover, since a bamboo board or the like is used in some cases in a drying process, a pattern may be formed on the surface.

The rice may be white rice, brown rice, red rice, green rice, black rice, and/or glutinous rice. The starch may be selected from the group consisting of potato starch, sweet potato starch, tapioca starch, corn starch, rice starch, and combinations thereof, and preferably, tapioca starch is selected.

The outer skin may be formed in the form of a thin dried marine algae sheet, including at least one selected from the group consisting of chlorella, green laver, sea staghorn, laver, agar-agar, seaweed, kelp, gulfweed, and hijiki. The aforementioned materials may be used alone or in combination. Such a thin dried marine algae sheet is obtained by drying the marine algae itself or fragments thereof, or flakes or powders of the marine algae, in the form of a thin sheet of an arbitrary shape. For example, a substance obtained by drying laver together with green laver, chlorella, seaweed, or the like can be used as the outer skin. In order to further improve the flavor of the marine algae, various seasonings may be further added to the marine algae.

The edible container may have various shapes that are easy for the user to grip. For example, the edible container may be formed by molding a planar sheet having various shapes, including a circle, a polygon such as a triangle or a quadrangle, or the like, into a three-dimensional shape.

Specifically, the edible container may have a cone shape in which the area of the cross section cut into a plane perpendicular to the vertical direction is decreased in the downward direction, and the cross-sectional shape of the cone is not limited, may have various cross-sectional shapes such as a circle, an ellipse, a triangle, a quadrangle, and other polygons, but is not limited thereto. For example, a cone shape having a circular cross section may be similar to the shape of an ice cream cone. For example, a cone shape having an elliptical cross section may be similar to the shape of a burrito or a wrap. For example, a cone shape having a quadrangular cross section may be similar to the shape of a pyramid. The cone-shaped edible container is easy for the user to grip, and thus is easily carried and eaten, and easily molded so that the preparation process is simple and the process cost can be saved.

For example, the edible container may have a cone-shaped structure formed by bonding the inner skin to the outer skin and then rolling the resultant into a three-dimensional cone shape, and specifically, the cone shape may be a round cone shape, a polygonal cone shape such as a quadrangular cone shape, or the like, but is not limited thereto.

Furthermore, the edible container may further include a bonding layer for bonding the inner skin to the outer skin, between the inner skin and the outer skin. The bonding layer is a layer formed of a bonding liquid for bonding the inner skin to the outer skin, and may be a mixture layer of a grain and/or starch and water, which is formed by mixing water with a grain and/or starch, a sugar solution layer, a starch water layer, an albumin liquid layer, a whole egg liquid layer, or a grain (glutinous rice) paste layer, and when only water is included as the bonding liquid, the bonding layer may not be clearly distinguished.

In the bonding liquid, in addition to water, a viscous edible liquid such as salt water, starch water, an albumin liquid, a whole egg liquid, or a grain paste may be added, or a plurality of these liquids may be contained. Moreover, depending on the materials of the inner skin and the outer skin, bonding is easily performed even if the inner skin is bonded to the outer skin using only water. Furthermore, the bonding liquid can also add a desired taste to the edible container by further containing a flavoring agent selected from among a lemon concentrate, a ginger concentrate, a Japanese apricot concentrate, a green tea powder, cinnamon syrup, a shrimp extract, a katsuobushi extract, a herbal extract, a bulgogi flavor seasoning, a lime flavor seasoning, or the like, in addition to the water.

The frozen cooked rice may be provided in the form of frozen food in a state of being contained in the edible container, or in the form of packaged frozen food in which an outer packaging material is further included.

Here, the frozen cooked rice may be composed of a plurality of frozen cooked rices. When the frozen cooked rice is composed of two frozen cooked rices, the two frozen cooked rices may be a first frozen cooked rice and a second frozen cooked rice. The first frozen cooked rice may be first inserted into an edible container, and the second frozen cooked rice may be later placed and stacked on the first frozen cooked rice. The first frozen cooked rice and the second frozen cooked rice may be accommodated in the internal space of the edible container in a state where these frozen cooked rices are stacked in the vertical direction as described above. However, the number of frozen cooked rices, which can be accommodated in the edible container, is not limited thereto.

Furthermore, the edible container may also include a moisture transfer preventing layer on the surface of the inner skin, the surface of the outer skin, or both the surfaces of the inner skin and the outer skin, and thus can play a role in preventing moisture transfer between the frozen cooked rice accommodated in the internal space and the edible container. When both the moisture transfer preventing layer of the frozen cooked rice and the moisture transfer preventing layer of the edible container are included, the moisture transfer prevention effect between the frozen cooked rice and the edible container can be maximized.

The moisture transfer preventing layer plays a role in preventing moisture contained in the inner skin and the outer skin, which are made of edible materials, from being transferred to the outside or the frozen cooked rice, and plays a role in maintaining the crispy food texture during distribution and/or storage or even after being cooked in a microwave oven.

The moisture transfer preventing layer may contain at least one moisture transfer preventing material selected from the group consisting of an edible fat or oil, shellac, lecithin, carnauba wax, and gelatin.

The edible fat or oil is a term in the food code and may mean a fat or oil which is edible. As the edible fat or oil contained in the moisture transfer preventing layer, an edible fat or oil which is a solid, a semi-solid, a liquid, or a solid powder at room temperature can be used, examples thereof include: a fat or oil which is a solid at room temperature, such as hydrogenated palm oil, hydrogenated palm kernel oil, shortening, or hydrogenated soybean oil; a fat or oil which is a semi-solid at room temperature, such as palm oil or partially hydrogenated soybean oil; a fat or oil which is a liquid at room temperature, such as palm olein oil, canola oil, olive oil, grape seed oil, brown rice oil, soybean oil, or corn oil; or fat or oil powders thereof, and a plurality of these fats or oils may be contained. The term "semi-solid" means a state between a solid and a liquid, means that the ability to maintain a shape is similar to that of a solid, and for the ability of flow, some of the properties of a liquid are shared, and may also be used in the sense of a quasi-solid, a semi-solid, a semi-liquid, or the like.

When a fat or oil, which is a solid or a semi-solid at room temperature, is used among the edible fats or oils contained in the moisture transfer preventing layer, and the edible fat or oil is cooked in a microwave oven, the edible fat or oil is absorbed or fixed, and thus there is the advantage in which the fat or oil is less likely to flow to the outside or get on hands when eating. Furthermore, even when the edible sheet is frozen and then stored for a long period of time, there is also an effect of blocking moisture by suppressing the transfer of moisture to the inside/outside of the edible sheet.

Hereinafter, the present invention will be described in more detail with reference to Examples.

However, the following Examples are for specifically illustrating the present invention, and the contents of the present invention are not limited by the following Examples.

### [Preparation Example 1] - Preparation of frozen cooked rice

### 1. Preparation of molded cooked rice

Rice cooking was performed using washed rice.

A seasoning oil, a seasoning liquid, vegetables, meat, and the like were put in a heating pot and fried to make one stir-fried ingredient, then the stir-fried ingredient was mixed with cooked rice, and the mixture was molded into a spherical shape.

### 2. Coating with moisture transfer preventing layer

3 wt% of a moisture transfer preventing layer containing a low sugar solution (30%, 60%), soybean oil, sesame oil, olive oil, canola oil, corn oil, perilla oil, gelatin, or a whole egg liquid at the concentration according to Table 1 below was applied to the surface of the molded cooked rice.

**[Table 1]**

| Classification | Concentration | Application Content |
|---|---|---|
| low sugar solution | 30%, 60% | 3 wt% |
| soybean oil | 60% | 3 wt% |
| sesame oil | 100% | 3 wt% |
| olive oil | 100% | 3 wt% |
| canola oil | 100% | 3 wt% |
| corn oil | 100% | 3 wt% |
| perilla oil | 100% | 3 wt% |
| gelatin | 20% | 3 wt% |
| whole egg liquid | 100% | 3 wt% |

### 3. Surface hardening

A method of evening (at 180°C for 8 minutes) or torching (for 3 seconds by direct fire) was performed as a surface hardening method.

### 4. Freezing

The molded cooked rice having a hardened surface was frozen for about 40 minutes in a sharp freezer set at - 40°C to -30°C, so that the object temperature reached -7°C or lower.

### [Preparation Example 2] - Preparation of frozen cooked rice inserted in edible container

After laver was bonded to rice-paper by spraying water, the resultant was molded using a cone-shaped mold, and then baked through an oven. Thereafter, the resultant was separated at room temperature and then allowed to cool to prepare a bonded sheet. Subsequently, an edible container was prepared in which an edible fat or oil (hydrogenated palm kernel oil) was applied onto both sides of the bonded sheet. The frozen cooked rice prepared according to Preparation Example 1 was inserted into the prepared edible container, and freezing processing was performed.

### [Experimental Example 1] Evaluation of moisture content of surface of frozen cooked rice according to hardening conditions and/or conditions for moisture transfer preventing layer

Regarding 24 simples prepared with the difference between a hardening process and a moisture transfer preventing layer coating process as shown in Tables 2 and 3 below, the results of measuring the moisture content of the surface of the frozen cooked rice under the following measurement conditions are shown in Table 2 below, the results of measuring the moisture content of the deep part of the frozen cooked rice are shown in Table 3 below, and the results of calculating the difference between the moisture content of the surface and the moisture content of the deep part in the frozen cooked rice are shown in Table 4 below.

### Measurement conditions

(1) Before freezing: The moisture content measured immediately without a separate freezing and defrosting process after preparing a molded cooked rice (or a molded cooked rice coated with a moisture transfer preventing layer) using cooked rice
(2) Day 1: The moisture content measured after storing the prepared molded cooked rice (or the molded cooked rice coated with a moisture transfer preventing layer) in a freezer (-18°C) for 1 day and then defrosting the molded cooked rice under conditions of normal temperature and normal pressure for 1 day in the state immediately before being bonded to an edible container (laver cone body)
(3) Day 9, day 22, and day 50: The moisture content measured after storing the finished frozen food (frozen cooked rice+laver cone body) in a freezer (-18°C), separating the frozen cooked rice from the frozen food on the 9^{th} day, the 22^{nd} day, and 50^{th} day, and then defrosting the frozen cooked rice under conditions of normal temperature and normal pressure for 1 day

### Measurement method

After the prepared frozen cooked rice was left alone at normal temperature/normal pressure for 24 hours and defrosted, and then the cooked rice was collected from the surface and the deep part of the frozen cooked rice, the moisture content was measured using a dry oven (105°C, overnight). The deep part was obtained by removing the surface of the frozen cooked rice which had hardened after the hardening.

**[Table 2]**

| Sample number | Hardening process | Coating process | Moisture content of surface of frozen cooked rice | | | | |
|---|---|---|---|---|---|---|---|
| | | | Before freezing | Day 1 | Day 9 | Day 22 | Day 50 |
| 1 | No separate hardening process | No coating | 53.6 wt% | 55.2 wt% | 53.3 wt% | 54.1 wt% | 52.4 wt% |
| 2 | | 30% Low sugar | 55.0 wt% | 55.0 wt% | 54.7 wt% | 54.9 wt% | 54.3 wt% |
| 3 | | 60% Low sugar | 54.1 wt% | 54.7 wt% | 53.5 wt% | 53.8 wt% | 50.5 wt% |
| 4 | | Soybean oil | 54.6 wt% | 51.2 wt% | 51.8 wt% | 52.9 wt% | 51.6 wt% |
| 5 | | Sesame oil | 54.7 wt% | 53.3 wt% | 52.8 wt% | 52.5 wt% | 53.4 wt% |
| 6 | | Olive oil | 49.6 wt% | 58.9 wt% | 53.5 wt% | 51.8 wt% | 51.0 wt% |
| 7 | | Canola oil | 59.7 wt% | 53.5 wt% | 51.8 wt% | 53.9 wt% | 51.3 wt% |
| 8 | | Corn oil | 53.3 wt% | 52.0 wt% | 52.7 wt% | 52.7 wt% | 51.8 wt% |
| 9 | | Gelatin | 56.8 wt% | 55.4 wt% | 55.1 wt% | 55.1 wt% | 55.0 wt% |
| Average | | | 54.6 wt% | 54.4 wt% | 53.2 wt% | 53.5 wt% | 52.4 wt% |
| 10 | Oven (at 180°C for 8 minutes) | No coating | 48.4 wt% | 46.5 wt% | 43.1 wt% | 44.3 wt% | 46.0 wt% |
| 11 | | 30% Low sugar | 57.5 wt% | 43.0 wt% | 44.6 wt% | 55.7 wt% | 44.8 wt% |
| 12 | | Soybean oil | 36.5 wt% | 43.5 wt% | 38.2 wt% | 39.9 wt% | 42.1 wt% |
| 13 | | Perilla oil | 41.1 wt% | 39.8 wt% | 41.4 wt% | 39.8 wt% | 38.9 wt% |
| 14 | | Canola oil | 38.5 wt% | 43.5 wt% | 40.2 wt% | 43.6 wt% | 41.6 wt% |
| 15 | | Gelatin | 43.2 wt% | 49.2 wt% | 46.1 wt% | 43.2 wt% | 47.9 wt% |
| 16 | | Whole egg liquid | 41.8 wt% | 40.3 wt% | 55.4 wt% | 56.7 wt% | 47.2 wt% |
| Average | | | 43.5 wt% | 43.6 wt% | 44.5 wt% | 45.0 wt% | 44.7 wt% |
| 17 | Torch (for 3 seconds) | No coating | 41.7 wt% | 55.8 wt% | 54.8 wt% | 55.6 wt% | 54.7 wt% |
| 18 | | 30% Low sugar | 41.6 wt% | 55.4 wt% | 55.8 wt% | 40.7 wt% | 54.9 wt% |
| 19 | | Soybean oil | 50.8 wt% | 54.1 wt% | 53.3 wt% | 50.9 wt% | 51.7 wt% |
| 20 | | Perilla oil | 52.7 wt% | 53.9 wt% | 54.2 wt% | 53.0 wt% | 53.4 wt% |
| 21 | | Canola oil | 52.7 wt% | 52.4 wt% | 55.6 wt% | 52.8 wt% | 47.7 wt% |
| 22 | | Olive oil | 52.5 wt% | 53.6 wt% | 53.5 wt% | 52.2 wt% | 52.3 wt% |
| 23 | | Gelatin | 56.3 wt% | 55.6 wt% | 56.6 wt% | 56.5 wt% | 56.6 wt% |
| 24 | | Whole egg liquid | 55.3 wt% | 56.5 wt% | - | - | - |
| Average | | | 50.5 wt% | 54.7 wt% | 54.8 wt% | 51.7 wt% | 54.5 wt% |

**[Table 3]**

| Sample number | Hardening process | Coating process | Moisture content of deep part of frozen cooked rice | | | | |
|---|---|---|---|---|---|---|---|
| | | | Before freezing | Day 1 | Day 9 | Day 22 | Day 50 |
| 1 | No separate hardening process | No coating | 64.0 wt% | 56.0 wt% | 57.2 wt% | 56.3 wt% | 56.3 wt% |
| 2 | | 30% Low sugar | 55.3 wt% | 57.1 wt% | 56.8 wt% | 57.6 wt% | 57.2 wt% |
| 3 | | 60% Low sugar | 57.1 wt% | 56.5 wt% | 57.1 wt% | 56.2 wt% | 56.4 wt% |
| 4 | | Soybean oil | 56.3 wt% | 55.7 wt% | 55.6 wt% | 53.9 wt% | 54.6 wt% |
| 5 | | Sesame oil | 58.6 wt% | 56.4 wt% | 57.5 wt% | 55.8 wt% | 56.0 wt% |
| 6 | | Olive oil | 55.3 wt% | 47.7 wt% | 54.4 wt% | 55.1 wt% | 54.1 wt% |
| 7 | | Canola oil | 54.8 wt% | 55.4 wt% | 54.6 wt% | 55.1 wt% | 54.2 wt% |
| 8 | | Corn oil | 52.9 wt% | 55.1 wt% | 55.2 wt% | 55.8 wt% | 54.2 wt% |
| 9 | | Gelatin | 56.9 wt% | 56.6 wt% | 57.3 wt% | 57.7 wt% | 55.3 wt% |
| Average | | | 56.8 wt% | 55.2 wt% | 56.2 wt% | 55.9 wt% | 55.4 wt% |
| 10 | Oven (at 180°C for 8 minutes) | No coating | 55.7 wt% | 55.5 wt% | 55.6 wt% | 55.2 wt% | 56.0 wt% |
| 11 | | 30% Low sugar | 58.1 wt% | 56.7 wt% | 56.2 wt% | 56.4 wt% | 56.8 wt% |
| 12 | | Soybean oil | 46.0 wt% | 55.7 wt% | 56.5 wt% | 53.3 wt% | 56.6 wt% |
| 13 | | Perilla oil | 51.7 wt% | 56.3 wt% | 58.5 wt% | 55.3 wt% | 56.7 wt% |
| 14 | | Canola oil | 53.9 wt% | 55.0 wt% | 53.9 wt% | 55.5 wt% | 56.7 wt% |
| 15 | | Gelatin | 54.4 wt% | 57.2 wt% | 56.7 wt% | 56.2 wt% | 56.6 wt% |
| 16 | | Whole egg liquid | 57.5 wt% | 57.2 wt% | 58.4 wt% | 56.5 wt% | 56.5 wt% |
| Average | | | 53.4 wt% | 56.3 wt% | 56.6 wt% | 55.3 wt% | 55.8 wt% |
| 17 | Torch (for 3 seconds) | No coating | 50.9 wt% | 56.9 wt% | 57.2 wt% | 56.8 wt% | 56.8 wt% |
| 18 | | 30% Low sugar | 60.5 wt% | 57.0 wt% | 57.5 wt% | 54.6 wt% | 58.2 wt% |
| 19 | | Soybean oil | 55.4 wt% | 55.4 wt% | 57.5 wt% | 58.4 wt% | 57.5 wt% |
| 20 | | Perilla oil | 53.7 wt% | 56.9 wt% | 56.5 wt% | 55.7 wt% | 54.1 wt% |
| 21 | | Canola oil | 57.8 wt% | 54.7 wt% | 56.2 wt% | 56.1 wt% | 57.9 wt% |
| 22 | | Olive oil | 52.7 wt% | 55.8 wt% | 56.6 wt% | 57.2 wt% | 53.7 wt% |
| 23 | | Gelatin | 54.8 wt% | 57.5 wt% | 57.8 wt% | 56.6 wt% | 57.8 wt% |
| 24 | | Whole egg liquid | 56.8 wt% | 58.0 wt% | - | - | - |
| Average | | | 55.3 wt% | 56.5 wt% | 57.1 wt% | 56.5 wt% | 56.6 wt% |

**[Table 4]**

| Sample number | Hardening process | Coating process | Difference between moisture content of surface and moisture content of deep part in frozen cooked rice | | | | |
|---|---|---|---|---|---|---|---|
| | | | Before freezing | Day 1 | Day 9 | Day 22 | Day 50 |
| 1 | No separate hardening process | No coating | 10.4 wt% | 0.7 wt% | 3.9 wt% | 2.2 wt% | 3.9 wt% |
| 2 | | 30% Low sugar | 0.3 wt% | 2.1 wt% | 2.1 wt% | 2.7 wt% | 2.9 wt% |
| 3 | | 60% Low sugar | 3.0 wt% | 1.8 wt% | 3.7 wt% | 2.4 wt% | 5.9 wt% |
| 4 | | Soybean oil | 1.7 wt% | 4.5 wt% | 3.8 wt% | 0.9 wt% | 3.1 wt% |
| 5 | | Sesame oil | 3.9 wt% | 3.1 wt% | 4.7 wt% | 3.3 wt% | 2.7 wt% |
| 6 | | Olive oil | 5.7 wt% | -11.2 wt% | 0.9 wt% | 3.3 wt% | 3.1 wt% |
| 7 | | Canola oil | -4.9 wt% | 1.8 wt% | 2.8 wt% | 1.2 wt% | 2.9 wt% |
| 8 | | Corn oil | -0.4 wt% | 3.1 wt% | 2.5 wt% | 3.1 wt% | 2.5 wt% |
| 9 | | Gelatin | 0.1 wt% | 1.3 wt% | 2.2 wt% | 2.6 wt% | 0.3 wt% |
| Average | | | 2.2 wt% | 0.8 wt% | 3.0 wt% | 2.4 wt% | 3.0 wt% |
| 10 | Oven (at 180°C for 8 minutes) | No coating | 7.3 wt% | 9.0 wt% | 12.5 wt% | 10.9 wt% | 10.0 wt% |
| 11 | | 30% Low sugar | 0.6 wt% | 13.7 wt% | 11.6 wt% | 0.6 wt% | 12.0 wt% |
| 12 | | Soybean oil | 9.5 wt% | 12.2 wt% | 18.3 wt% | 13.4 wt% | 14.5 wt% |
| 13 | | Perilla oil | 10.6 wt% | 16.5 wt% | 17.1 wt% | 15.5 wt% | 17.8 wt% |
| 14 | | Canola oil | 15.4 wt% | 11.6 wt% | 13.7 wt% | 12.0 wt% | 15.1 wt% |
| 15 | | Gelatin | 11.2 wt% | 8.0 wt% | 10.7 wt% | 13.0 wt% | 8.6 wt% |
| 16 | | Whole egg liquid | 15.7 wt% | 17.0 wt% | 3.0 wt% | -0.2 wt% | 9.3 wt% |
| Average | | | 9.9 wt% | 12.7 wt% | 12.1 wt% | 10.3 wt% | 11.1 wt% |
| 17 | Torch (for 3 seconds) | No coating | 9.2 wt% | 1.1 wt% | 2.4 wt% | 1.3 wt% | 2.2 wt% |
| 18 | | 30% Low sugar | 18.9 wt% | 1.5 wt% | 1.6 wt% | 13.9 wt% | 3.4 wt% |
| 19 | | Soybean oil | 4.6 wt% | 1.3 wt% | 4.2 wt% | 7.5 wt% | 5.8 wt% |
| 20 | | Perilla oil | 1.0 wt% | 3.0 wt% | 2.4 wt% | 2.7 wt% | 0.7 wt% |
| 21 | | Canola oil | 5.1 wt% | 2.3 wt% | 0.6 wt% | 3.3 wt% | 0.2 wt% |
| 22 | | Olive oil | 0.2 wt% | 2.2 wt% | 3.1 wt% | 4.9 wt% | 1.4 wt% |
| 23 | | Gelatin | -1.5 wt% | 1.9 wt% | 1.2 wt% | 0.1 wt% | 1.1 wt% |
| 24 | | Whole egg liquid | 1.5 wt% | 1.6 wt% | - | - | - |
| Average | | | 4.9 wt% | 1.9 wt% | 2.2 wt% | 4.8 wt% | 2.1 wt% |

According to Table 2, as seen from the moisture content of the molded cooked rice immediately after the preparation and before being frozen, when the oven and torch processes were processed, the moisture content of the surface of the molded cooked rice (or the molded cooked rice coated with the moisture transfer preventing layer) tended to be decreased (oven: -11.1 wt% on average, torch: -4.1 wt% on average). However, when freezer storage was performed, the moisture content in the case where the hardening process was performed with a torch was close to the moisture content in the case where the hardening process was not performed. Therefore, it was found that the hardening process using an oven rather than a torch was more effective in removing the moisture content of the surface of frozen cooked rice. Moreover, when a separate hardening process was not performed, a significant difference depending on whether the coating with the moisture transfer preventing layer was performed could not be found, but when the hardening process was processed, it was confirmed that there was a difference depending on the type of the moisture transfer preventing layer. In particular, when the surface was hardened through evening and soybean oil, perilla oil, or canola oil, and more specifically, soybean oil or perilla oil was included as the moisture transfer preventing layer, it was confirmed that the effect of removing the moisture content of the surface of the frozen cooked rice was higher overall, compared to other types of edible fats or oils.

The gelatin is prepared by partially hydrolyzing collagen obtained from animal bones and skin or the like, and was expected to be effective in preventing moisture transfer by forming a gel-like film when coating the frozen cooked rice. However, according to Experimental Example 1, it was confirmed that the moisture of the gelatin aqueous solution penetrated into the inside or the outside of the frozen cooked rice, and thus the gelatin is ineffective in removing the moisture content of the surface.

The whole egg liquid was also expected to be effective in preventing moisture transfer by the protein denaturation of the whole egg liquid occurring after the hardening process, but similar to the gelatin aqueous solution, it was confirmed that the whole egg liquid is ineffective in removing the moisture content of the surface of the frozen cooked rice.

According to Table 3, it was confirmed that the moisture content of the deep part of the frozen cooked rice tended to be higher overall, compared to the surface of the frozen cooked rice. Such a difference tended to be large when the hardening process was performed.

As seen from the moisture content of the frozen cooked rice immediately after the preparation and before being frozen, when an oven was used, and when the process using a torch was processed, there was the effect of slightly reducing the moisture content of the deep part, but it was confirmed that the difference did not appear as large as the surface of the frozen cooked rice.

## Claims

1. A frozen cooked rice comprising
a molded cooked rice; and
a moisture transfer preventing layer formed on at least a part of the surface of the molded cooked rice,
wherein after the frozen cooked rice is defrosted under conditions of normal temperature and normal pressure for 1 day, the difference between the moisture content of the surface of the frozen cooked rice and the moisture content of a deep part of the frozen cooked rice is 5 wt% or more based on the total weight of the frozen cooked rice.

2. The frozen cooked rice of claim 1, wherein after the frozen cooked rice is defrosted under conditions of normal temperature and normal pressure for 1 day, the moisture content of the surface of the frozen cooked rice is 50 wt% or less per 1 g of the frozen cooked rice, and the moisture content of the deep part of the frozen cooked rice is 50 to 60 wt% per 1 g of the frozen cooked rice.

3. The frozen cooked rice of claim 1, wherein the molded cooked rice comprises cooked rice and at least one selected from among a raw material and a sauce.

4. The frozen cooked rice of claim 1, wherein the moisture transfer preventing layer comprises at least one selected from among a low sugar solution and an edible fat or oil.

5. The frozen cooked rice of claim 4, wherein the edible fat or oil comprises at least one selected from among drying oil, semi-drying oil, and non-drying oil.

6. The frozen cooked rice of claim 4, wherein the edible fat or oil comprises at least one selected from among perilla oil, bean oil, soybean oil, sunflower seed oil, sesame oil, canola oil, grape seed oil, olive oil, and palm oil.

7. The frozen cooked rice of claim 4, wherein the edible fat or oil comprises at least one selected from among drying oil and semi-drying oil.

8. The frozen cooked rice of claim 4, wherein the edible fat or oil comprises at least one selected from among soybean oil, perilla oil, and canola oil.

9. The frozen cooked rice of claim 1, wherein at least a part of the surface of the frozen cooked rice is hardened.

10. The frozen cooked rice of claim 9, wherein the frozen cooked rice is hardened using at least one selected from among an oven, torching, and hot air.

11. A method for preparing a frozen cooked rice, comprising:
forming a moisture transfer preventing layer on at least a part of the surface of a molded cooked rice;
hardening the at least a part of the surface of the molded cooked rice on which the moisture transfer preventing layer is formed; and
freezing the hardened molded cooked rice.

12. The method for preparing a frozen cooked rice of claim 11, wherein the molded cooked rice is prepared by cooking rice as a main raw material to prepare cooked rice, and mixing at least one among a raw material and a sauce with the cooked rice.

13. The method for preparing a frozen cooked rice of claim 11, further comprising molding the molded cooked rice into at least one shape selected from among a sphere, a hemisphere, a crushed sphere, a cube, a bar, a cylinder, a polygonal column, and a half-ellipsoid, before forming the moisture transfer preventing layer.

14. The method for preparing a frozen cooked rice of claim 11, wherein the forming of a moisture transfer preventing layer comprises applying a moisture transfer preventing liquid including at least one selected from among a low sugar solution and an edible fat or oil.

15. The method for preparing a frozen cooked rice of claim 14, wherein the moisture transfer preventing liquid is applied in an amount of 1 to 10 parts by weight based on 100 parts by weight of the molded cooked rice.

16. The method for preparing a frozen cooked rice of claim 11, wherein the hardening of the surface of the molded cooked rice on which the moisture transfer preventing layer is formed is hardening using at least one method selected from among an oven, torching, and hot air.

17. The method for preparing a frozen cooked rice of claim 11, wherein the freezing comprises at least one selected from among freezing the hardened molded cooked rice at a temperature of -30°C to -5°C for 6 to 36 hours so that the material temperature reaches -7°C, quick freezing the hardened molded cooked rice at a temperature of -70°C to - 5°C for 10 to 30 minutes, and freezing the hardened molded cooked rice at a temperature of -40°C to -30°C for 30 minutes to 1 hour.
